# FASCICULE DE BREVET EUROPEEN

(11) **EP 3 737 575 B1**
(45) Date de publication et mention de la délivrance du brevet: **26.01.2022**
(21) Numéro de dépôt: 18833481.7
(22) Date de dépôt: 13.12.2018
(51) Int. Cl.: B60J 5/06

(54) **BOÎTIER DE RAIL CENTRAL DE PORTE COULISSANTE DE VÉHICULE AUTOMOBILE**
MITTELSCHIENENGEHÄUSE EINER SCHIEBETÜR EINES KRAFTFAHRZEUGES
CENTRAL RAIL HOUSING OF A SLIDING DOOR OF A MOTOR VEHICLE

(30) Priorité: 09.01.2018 FR 1850176
(43) Date de publication de la demande: 18.11.2020
(73) Titulaire: PSA Automobiles SA, 78300 Poissy (FR)
(72) Inventeur: LEFEVRE, Eric, 91470 LIMOURS (FR)
(86) Numéro de dépôt international: PCT/FR2018/053255
(87) Numéro de publication internationale: WO 2019/138164

(56) Documents cités:
- WO-A1-2015/040314
- DE-U1-202009 006 145
- JP-A- S5 934 924
- US-A1- 2005 212 333
- US-A1- 2005 253 422
- US-A1- 2016 297 480

## Description

L'invention a trait au domaine des véhicules automobiles comprenant une porte latérale coulissante, et s'adresse aussi bien aux véhicules automobiles de type « utilitaire » qu'aux véhicules automobiles de type « tourisme » destinés aux particuliers.

Les véhicules automobiles de type « utilitaire » comprenant une porte latérale coulissante disposent d'un accès latéral pour charger du matériel. Il est généralement recherché à ce que cet accès latéral soit de taille suffisante pour l'embarquement de matériel encombrant. Les dimensions de l'ouverture d'accès à l'espace de chargement sont définies par les dimensions de l'ouverture réalisée dans la carrosserie à cette fin, et de la course de la porte latérale coulissante pour dégager cette ouverture. La porte latérale coulissante comprend généralement deux chariots avant, supérieur et inférieur, aptes à coulisser dans des rails de guidage sur la carrosserie, au-dessus et en-dessous de l'ouverture d'accès à l'espace de chargement. Elle comprend également un chariot arrière apte à coulisser dans un rail central sur la carrosserie et s'étendant vers l'arrière depuis ladite ouverture. Dans le cas des véhicules de type « tourisme », la porte latérale coulissante donne accès à l'habitacle du véhicule et en particulier aux sièges passagers du rang 2.

Le document FR3047445 décrit une carrosserie de véhicule automobile comprenant une paroi latérale, une paroi arrière jointive avec la paroi latérale, un boîtier formant un rail de guidage d'une porte coulissante du véhicule ou une cavité longitudinale apte à recevoir ledit rail. Ledit boîtier s'étend horizontalement sur la face intérieure de la paroi latérale. La carrosserie comprend en outre un couvercle de fermeture de l'extrémité arrière du boîtier. Le couvercle épouse au moins partiellement le profil de l'extrémité arrière du boîtier et prend appui sur la face intérieure de la paroi arrière jointive.

Le document EP1092574 décrit un agencement d'un rail de guidage d'une porte coulissante de véhicule dans lequel au moins une partie du rail se situe dans un boîtier traversant une ouverture dans la structure du véhicule. Le boîtier est étanche en lui-même et conformé de façon à obturer ladite ouverture de manière étanche vis-à-vis de l'extérieur.

Le document DE 202007009719 décrit un mécanisme de commande de porte destiné à au moins un vantail de porte dans un véhicule. Le mécanisme de commande de porte comprend deux pièces de retenue latérales dotées de moyens de fixation permettant de les raccorder à la paroi du véhicule. Un dispositif amovible est placé entre les pièces de retenue en question et présente au moins un mécanisme de réception du vantail de porte, un guide transversal gauche et un guide transversal droit placés respectivement entre le dispositif amovible et l'une des pièces de retenue latérale et permettant un déplacement transversal, perpendiculairement à l'ouverture.

Les documents US 2016/297480 A1 et US 2005/253422 A1 décrivent des portes coulissantes des véhicules automobiles.

L'art antérieur montre une problématique commune d'étanchéité du boîtier de rail de guidage. De ce fait, les boîtiers de rail central se présentent sous forme d'un assemblage d'une pluralité d'éléments, ce qui se répercute sur leur coût de production. Un exemple de boîtier de rail central selon l'art antérieur peut se présenter en deux parties, une partie avant et une partie arrière. La partie avant est recourbée de sorte à s'enfoncer vers l'intérieur du véhicule depuis la surface extérieure de la carrosserie. Classiquement, ladite partie avant comprend trois éléments en tôle soudés les uns aux autres et deux inserts gonflants. Malheureusement, des problèmes d'étanchéité peuvent parfois apparaître dans les zones de jonction des pièces formant ladite partie avant.

Il serait intéressant de pouvoir trouver des moyens de renforcer les prestations de tels boîtiers en matière d'étanchéité, tout en conservant leurs prestations mécaniques.

L'invention a pour objectif de répondre à au moins un des inconvénients de l'art antérieur en proposant un nouveau boîtier de rail montrant un nombre de pièces à assembler réduit par rapport à l'art antérieur.

A cet effet, et selon un premier aspect, l'invention a pour objet un boîtier de rail pour porte coulissante de véhicule automobile, le boîtier comprenant une partie avant et une partie arrière, la partie arrière étant reliée par une de ses extrémités à la partie avant, la partie avant présentant une courbure, le boîtier étant remarquable en ce que la partie avant comprend un embouti métallique dont la section a un profil en forme de « L » de telle sorte à présenter une paroi inférieure et une paroi latérale.

La courbure de la partie avant du boîtier est configurée pour que ledit boîtier de rail s'étende en direction de l'intérieur du véhicule lorsqu'il est monté sur ledit véhicule. Préférentiellement, le boîtier de rail est destiné à recevoir un rail central pour porte coulissante de véhicule automobile.

Comme on l'aura compris à la lecture de la définition qui vient d'en être donnée, l'invention propose de simplifier le procédé d'assemblage d'un boîtier de rail en proposant de réunir en une seule pièce, les parois latérale et inférieure dudit boîtier. L'invention est remarquable en ce qu'une telle configuration permet en outre d'améliorer les prestations en termes d'étanchéité du boîtier en partie avant puisqu'il n'est plus possible de constater une fuite à ce niveau.

Selon l'invention, la partie avant comprend en outre une paroi supérieure formée par un insert gonflant. Avantageusement :
- l'insert gonflant formant la paroi supérieure est en un matériau thermoplastique ou thermodurcissable, choisi dans le groupe comprenant les polypropylènes, les polyamides, les polyphtalamides, les polyétheréthercétones, les polysulfures de phénylène, les polyamides-imide, les polyétherimides, les polyarylamides, les polyépoxydes, les polyesters insaturés, les vinylesters et les polyesters-vinylester ; et/ou
- l'insert gonflant est fixé à la paroi latérale de l'embouti de la partie avant, de préférence par clippage.

Cette configuration est avantageuse en ce qu'elle permet d'optimiser la définition du boîtier de rail central en diminuant le nombre de pièces le composant du fait d'un remplacement de certaines de ses pièces par des inserts gonflants. Le remplacement de la paroi supérieure par un insert gonflant est possible puisque cette dernière n'est pas soumise à des efforts importants comme la paroi latérale d'une part, et d'autre part parce que la jonction entre la paroi latérale et la paroi supérieure pose moins de problèmes d'étanchéité que la jonction entre la paroi latérale et la paroi inférieure.

L'invention est remarquable en ce qu'elle permet à la fois de réduire les coûts de montage dudit boîtier et de l'alléger au niveau de sa masse tout en maintenant voire en améliorant son étanchéité.

Selon un autre mode de réalisation alternatif ou complémentaire du précédent, l'embouti comprenant les parois inférieure et latérale de la partie avant comprend également une paroi d'extrémité avant formant un retour et fermant l'extrémité avant de la partie avant du boîtier, de préférence ladite paroi d'extrémité se prolonge par une languette de reprise d'effort. Préférentiellement, l'embouti comprenant les parois inférieure et latérale de la partie avant comprend également une paroi d'extrémité avant formant un retour et fermant l'extrémité avant de la partie avant du boîtier, et l'insert gonflant, formant la paroi supérieure, présente un doigt porteur de matière expansive et s'étendant en direction de la paroi inférieure, de préférence ledit doigt s'étend selon une ligne de jonction entre ladite paroi d'extrémité et une languette de reprise d'effort s'étendant en prolongement de ladite paroi d'extrémité.

Ainsi, bien que disposé horizontalement, l'insert gonflant présente des moyens pour assurer l'étanchéité entre le boitier et la carrosserie du véhicule également selon la direction verticale.

De préférence, la paroi inférieure de l'embouti de la partie avant comprend des pattes de support destinées au support d'un cordon d'étanchéité. Cette solution permet d'économiser un insert gonflant en partie inférieure de la partie avant.

Avantageusement, la partie arrière du boîtier présentant une paroi d'extrémité, le boîtier est remarquable en ce qu'un insert gonflant est fixé sur ladite paroi d'extrémité, de préférence par clippage.

Optionnellement, la partie arrière du boîtier présentant une paroi d'extrémité, le boîtier est remarquable en ce qu'il comprend des pattes de positionnement disposées en partie arrière au niveau de la paroi d'extrémité et/ou en partie avant au niveau de la paroi inférieure. De préférence, la paroi inférieure de la partie avant comprend des pattes de support destinées au support d'un cordon d'étanchéité, et la ou les pattes de positionnement en partie avant sont disposées en prolongement desdites pattes de support.

Selon un deuxième aspect, l'invention a pour objet un véhicule remarquable en ce qu'il comprend au moins un boîtier de rail tel que défini selon le premier aspect de l'invention.

Selon un troisième aspect, l'invention a pour objet l'utilisation d'un insert gonflant en tant que paroi supérieure d'un boîtier de rail tel que défini selon le premier aspect de l'invention.

L'invention sera bien comprise et d'autres aspects et avantages apparaîtront clairement à la lecture de la description qui suit donnée en référence à la planche de dessins annexée sur laquelle :
- La figure 1 est une vue générale d'un véhicule montrant le positionnement d'un rail central susceptible d'être fixé dans un boîtier selon l'invention.
- La figure 2 est une représentation d'un boîtier de rail central selon l'invention.

Dans la description qui suit, le terme « comprendre » est synonyme de « inclure » et n'est pas limitatif en ce qu'il autorise la présence d'autres éléments dans le boîtier de rail central ou le véhicule auquel il se rapporte. Il est entendu que le terme « comprendre » inclut les termes « consister en ». Les termes « inférieur », « supérieur », « avant » et « arrière » s'entendront par rapport à l'orientation générale du véhicule. « Inférieur» désignera une proximité au sol plus importante que « supérieur » selon l'axe vertical. Sur les différentes figures, les mêmes références désignent des éléments identiques ou similaires.

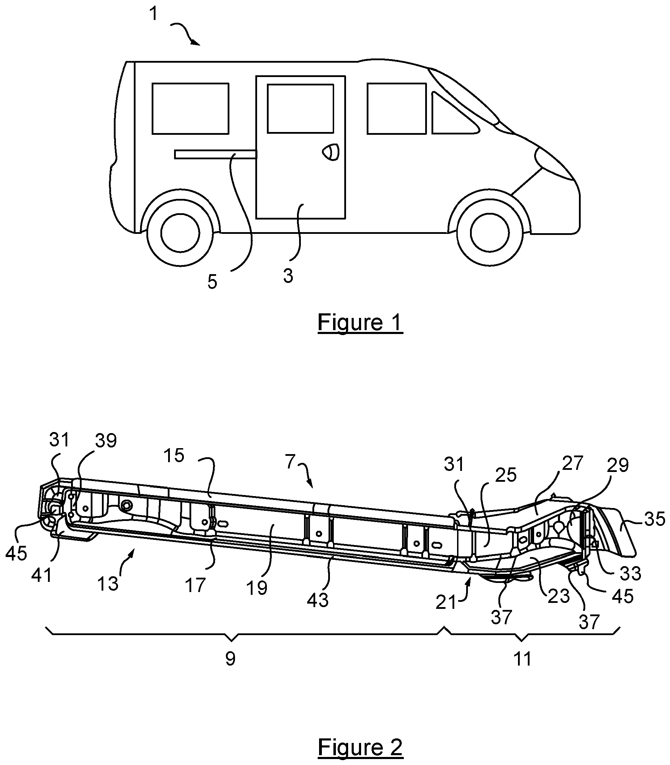

La figure 1 représente un véhicule 1 présentant une porte coulissante 3 latérale placée en position d'obturation d'une ouverture latérale. La porte coulissante 3 est déplaçable entre une position d'obturation et une position de dégagement de cette ouverture par coulissement le long de rails de guidage inférieur et supérieur, et également le long d'un rail de guidage central 5.

On se référera à présent à la figure 2, illustrant un boîtier de rail 7 selon l'invention. Le boîtier de rail 7 est un boîtier dans lequel est monté un rail de guidage (non représenté) pour porte latérale coulissante d'un véhicule automobile. Le boîtier de rail 7 est destiné à recevoir le rail central de guidage de la porte et à ce titre il est destiné à être ouvert sur l'extérieur du véhicule. De ce fait, le boîtier présente des moyens d'étanchéité afin de limiter l'intrusion d'eau de pluie ou de lavage entre la structure et la carrosserie du véhicule.

Le boîtier selon l'invention comporte deux parties. Une partie arrière 9 sensiblement rectiligne et dans laquelle le chariot associé au rail de guidage va coulisser lors des opérations d'ouverture et de fermeture de la porte. Une partie avant 11 recourbée vers l'intérieur du véhicule dont la déviation dépend de la distance d'écartement compatible avec les déplacements de la porte. Les parties avant 9 et arrière 11 sont fixées l'une à l'autre, de préférence par soudage. Le boîtier 7 est, en outre, fixé à la structure de caisse du véhicule, par exemple, par vissage.

Le boîtier 7 recevant un rail de guidage de la porte coulissante du véhicule, il est avantageusement réalisé en matériau métallique pour des raisons de tenue à l'effort suffisante. Ainsi, par exemple le boîtier 7 est réalisé en acier.

Les différentes parties (9, 11) sont ainsi réalisées par emboutissage. La partie arrière 9, rectiligne, se présente sous forme d'un embouti métallique 13 dont la section a un profil en forme de U, incliné à 90 degrés environ, de telle sorte à présenter une paroi supérieure 15, une paroi inférieure 17 et une paroi latérale 19. Les parois inférieure 17 et supérieure 15 sont toutes les deux destinées à être disposées horizontalement. La paroi latérale 19 est, quant à elle, destinée à être verticale. Elle forme le fond du boîtier 7 et est destinée à recevoir en fixation le rail de guidage. Le boîtier 7 est fixé à la structure du véhicule, sur une paroi verticale, par son fond (i.e la paroi latérale 19). La fixation se fait, par exemple, par vissage par un ensemble vis et écrou (non représenté). La structure du véhicule va, en fait, servir de support au rail de guidage, si bien que le fond du boîtier 7 est, en partie ou en totalité, pris en sandwich entre d'une part le rail de guidage et d'autre part la structure du véhicule. C'est-à-dire que l'ensemble de fixation vis-écrou assure simultanément la fixation du rail et du boîtier 7 sur la structure.

Selon l'invention, la partie avant 11 comprend un embouti métallique 21 dont la section a un profil en forme de « L » de telle sorte à présenter une paroi inférieure 23 et une paroi latérale 25 formant le fond du boîtier 7 en continuation de la paroi latérale 19 de la partie arrière 9.

Cette configuration est particulièrement avantageuse en ce qu'elle permet de renforcer la prestation d'étanchéité du boîtier 7, tout en minimisant le nombre d'éléments à assembler.

Selon un mode de réalisation non représenté de l'invention, la partie avant du boîtier comprend une paroi supérieure, agencée pour être disposée parallèlement à la paroi inférieure. Cette paroi supérieure est réalisée en tôle et, par exemple, fixée par soudage. La paroi supérieure du boîtier porte alors un insert gonflant pour assurer l'étanchéité du boîtier. L'expression « insert gonflant » désigne une pièce comprenant une base par exemple en matériau plastique ou en matériau métallique, surmontée d'une mousse expansive.

Les inserts gonflants sont des solutions d'étanchéité, connues en soi, et largement utilisées dans le domaine de la fabrication automobile. Ils sont produits en plaques, découpés à la demande, puis collés sur des bases. Le boîtier de rail supportant au moins un insert gonflant est monté sur la caisse du véhicule durant le ferrage. Durant la phase de cataphorèse, la matière expansive du ou des inserts gonfle sous l'effet de la chaleur produite par le four, de sorte à former une liaison étanche.

Néanmoins, selon une mise en œuvre préférée de l'invention, la paroi supérieure de la partie avant 11 est constituée par un insert gonflant 27, ou insert gonflant 27 avant, qui est fixé sur la paroi latérale 19 de l'embouti de la partie avant 11 par clippage. Afin de former une liaison étanche, la matière expansive 31 est disposée sur l'arête de l'insert gonflant 27 destinée à être placée en regard du panneau de carrosserie, sur sa face intérieure, lorsque le boîtier est monté dans ledit véhicule.

L'invention est remarquable en ce qu'elle substitue un insert gonflant 27 à une pièce en tôle en partie avant supérieure du boîtier 7. L'insert gonflant 27 est avantageusement réalisé en matériau plastique ou composite. Avantageusement, il est réalisé en un matériau thermoplastique ou thermodurcissable, choisi dans le groupe comprenant les polypropylènes, les polyamides, les polyphtalamides, les polyétheréthercétones, les polysulfures de phénylène, les polyamides-imide, les polyétherimides, les polyarylamides, les polyépoxydes, les polyesters insaturés, les vinylesters et les polyesters-vinylester. De préférence encore, l'insert gonflant 27 est en polyamide. Par cette caractéristique du boîtier 7, la paroi supérieure de la partie avant 11 est constituée d'un matériau différent de celui des parois inférieure 23 et latérale 25.

De tels inserts gonflants 27 sont connus et disponibles commercialement, ils ne seront donc pas décrits ici plus avant. Une telle substitution permet de limiter le coût de revient du boîtier 7 en réalisant une économie de matériau et en simplifiant le procédé d'assemblage du boîtier 7. Elle permet également d'alléger le poids global dudit boîtier 7 et répond ainsi au souci constant d'allégement de la masse des véhicules, et donc de la réduction des émissions polluantes, telles que les émissions de dioxyde de carbone.

Selon un mode de réalisation préféré de l'invention, l'embouti 21 comprenant les parois inférieure 23 et latérale 25 de la partie avant 11 comprend également une paroi d'extrémité 29 avant formant un retour et fermant l'extrémité avant de la partie avant 11 du boîtier 7 en rejoignant le panneau de carrosserie sur sa face intérieure. L'invention est remarquable en ce que l'insert gonflant 27 utilisé sur la portion supérieure de la partie avant 11, qu'il se substitue ou non à la tôle supérieure, va présenter un doigt 33 destiné à s'étendre verticalement, de telle sorte à se positionner le long de l'arrête verticale de la paroi d'extrémité 29. Cette configuration est avantageuse en ce qu'elle permet de placer de la mousse expansive 31 assurant l'étanchéité entre le boîtier 7 et le panneau de carrosserie sur sa face intérieure au véhicule, à la fois sur l'arrête de la paroi supérieure en regard dudit panneau de carrosserie et sur l'arrête de la paroi d'extrémité également en regard de la face intérieure dudit panneau de carrosserie.

Selon un mode de réalisation préféré de l'invention, la paroi d'extrémité 29 se prolonge par une languette 35 de reprise d'effort destinée à venir en appui sur la feuillure d'entrée de porte arrière du côté intérieur (i.e. du côté habitacle). Ce mode de réalisation est compatible avec l'utilisation d'un insert gonflant 27 avant présentant un doigt 33, ce doigt s'étend alors le long de la jonction entre la paroi d'extrémité 29 et de la languette 35, et non plus sur l'arrête de la paroi d'extrémité.

L'étanchéité de la partie avant au niveau de sa paroi inférieure peut être assurée également par un insert gonflant rapporté sur ladite paroi. Néanmoins, selon un mode de réalisation préféré de l'invention, l'étanchéité de la partie avant 11 au niveau de sa paroi inférieure 23 est assurée par un cordon d'étanchéité (non représenté) formant un joint. A cette fin, la paroi inférieure 23 de la partie avant 11 est avantageusement dotée de pattes de support 37 pour soutenir un tel cordon. Ce cordon est, par exemple, un cordon de colle qui est destiné à polymériser lors du passage du véhicule dans l'étuve lors de la phase de cataphorèse. Ces joints sont bien connus de l'homme du métier et ne seront pas décrits plus avant. La substitution d'un cordon de colle à un insert gonflant est avantageuse en ce qu'elle étanchéifie la zone considérée tout en réduisant les coûts de production.

Selon un mode de réalisation préféré de l'invention, la partie arrière 9 du boîtier 7 présente également une paroi d'extrémité 39 pour sa fermeture, sur laquelle est fixé, par clippage, un insert gonflant 41, ci-après nommé insert gonflant arrière. L'insert gonflant arrière va assurer l'étanchéité entre l'extrémité arrière du boîtier et le panneau de carrosserie du véhicule, et porte de la matière expansive 31 sur sa face destinée à être placée en regard du panneau de carrosserie.

L'étanchéité entre la paroi inférieure de la partie arrière 9 sur la zone s'étendant entre l'insert gonflant 41 arrière et le cordon d'étanchéité de la paroi inférieure avant, peut être assurée également par un cordon d'étanchéité. A cet effet, la paroi inférieure de la partie arrière 9 comprend avantageusement une gorge 43 destinée à recevoir et soutenir ledit cordon.

L'étanchéité entre la paroi supérieure de la partie arrière 9 sur la zone s'étendant entre l'insert gonflant 41 arrière et l'insert gonflant 27 supérieur avant, peut être assurée par un cordon de calage (non représenté). Les cordons de calage présentent l'avantage d'éviter la présence de marques sur la carrosserie, ce qui nuirait à l'esthétique du véhicule. Ils sont constitués de matière organique qui se fige lorsque la caisse du véhicule est passée en étuve pendant la phase de cataphorèse lors du traitement anticorrosion du véhicule. En l'espèce, la mise en place d'un tel cordon va assurer la liaison entre le panneau de carrosserie et le boîtier 7 tout en assurant l'étanchéité entre ces éléments.

Selon l'invention, le boîtier est mis en place sur le panneau de carrosserie au moment du ferrage. A cet effet, le boîtier présente avantageusement des pattes de positionnement 45 disposées en partie arrière 9 au niveau de la paroi d'extrémité et en partie avant 11 au niveau de la paroi inférieure. Lorsque ladite paroi comprend des pattes de support d'un cordon d'étanchéité, la ou les pattes de positionnement 45 peuvent s'étendre depuis lesdites pattes de support 37, qui montrent alors une double fonction de support du cordon d'étanchéité et de positionnement.

## Revendications

1. Boîtier de rail (7) pour porte coulissante (3) de véhicule automobile (1), le boîtier (7) comprenant une partie arrière (9) et une partie avant (11), la partie arrière (9) étant reliée par une de ses extrémités à la partie avant (11), la partie avant (11) présentant une courbure, la partie avant (11) comprenant un embouti métallique (21) dont la section a un profil en forme de « L » de telle sorte à présenter une paroi inférieure (23) et une paroi latérale (25), le boîtier (7) étant **caractérisé en ce que** la partie avant (11) comprend en outre une paroi supérieure formée par un insert gonflant (27).

2. Boîtier de rail (7) selon la revendication 1, **caractérisé en ce que** l'insert gonflant (27) formant la paroi supérieure est en un matériau thermoplastique ou thermodurcissable, choisi dans le groupe comprenant les polypropylènes, les polyamides, les polyphtalamides, les polyétheréthercétones, les polysulfures de phénylène, les polyamides-imide, les polyétherimides, les polyarylamides, les polyépoxydes, les polyesters insaturés, les vinylesters et les polyesters-vinylester.

3. Boîtier de rail (7) selon l'une des revendications 1 ou 2, **caractérisé en ce que** l'insert gonflant (27) est fixé à la paroi latérale de l'embouti de la partie avant, de préférence par clippage.

4. Boîtier de rail (7) selon l'une des revendications 1 à 3, **caractérisé en ce que** l'embouti (21) comprenant les parois inférieure (23) et latérale (25) de la partie avant (11) comprend également une paroi d'extrémité (29) avant formant un retour et fermant l'extrémité avant de la partie avant (11) du boîtier (7), de préférence ladite paroi d'extrémité (29) se prolonge par une languette (35) de reprise d'effort.

5. Boîtier de rail (7) selon l'une des revendications 1 à 4, **caractérisé en ce que** l'embouti (21) comprenant les parois inférieure (23) et latérale (25) de la partie avant (11) comprend également une paroi d'extrémité (29) avant formant un retour et fermant l'extrémité avant de la partie avant (11) du boîtier (7), et **en ce que** l'insert gonflant (27), formant la paroi supérieure, présente un doigt porteur de matière expansive et s'étendant en direction de la paroi inférieure (23), de préférence ledit doigt s'étend selon une ligne de jonction entre ladite paroi d'extrémité (29) et une languette (35) de reprise d'effort s'étendant en prolongement de ladite paroi d'extrémité.

6. Boîtier de rail (7) selon l'une des revendications 1 à 5, caractérisé en ce la paroi inférieure (23) de l'embouti de la partie avant (11) comprend des pattes de support (37) destinées au support d'un cordon d'étanchéité.

7. Boîtier de rail (7) selon l'une des revendications 1 à 6, la partie arrière (9) du boîtier (7) présentant une paroi d'extrémité (39), le boîtier (7) est **caractérisé en ce qu'**un insert gonflant (41) est fixé sur ladite paroi d'extrémité (39), de préférence par clippage.

8. Boîtier de rail (7) selon l'une des revendications 1 à 7, la partie arrière (9) du boîtier (7) présentant une paroi d'extrémité (39), le boîtier (7) est **caractérisé en ce qu'**il comprend des pattes de positionnement (45) disposées en partie arrière (9) au niveau de la paroi d'extrémité et/ou en partie avant (11) au niveau de la paroi inférieure (23), de préférence la paroi inférieure (23) de la partie avant (11) comprend des pattes de support (37) destinées au support d'un cordon d'étanchéité, et la ou les pattes de positionnement (45) en partie avant sont disposées en prolongement desdites pattes de support (37).

9. Véhicule (1) comprenant une porte coulissante (3) **caractérisé en ce qu'**il comprend en outre au moins un boîtier de rail (7) selon l'une des revendications 1 à 8.

## Patentansprüche

1. Schienengehäuse (7) für eine Schiebetür (3) eines Kraftfahrzeugs (1), wobei das Gehäuse (7) ein hinteres Teil (9) und ein vorderes Teil (11) umfasst, wobei das hintere Teil (9) mit einem seiner Enden mit dem vorderen Teil (11) verbunden ist, wobei das vordere Teil (11) eine Krümmung aufweist, wobei das Gehäuse (7) **dadurch gekennzeichnet ist, dass** das vordere Teil (11) ein Metallstück (21) umfasst, dessen Querschnitt ein L-förmiges Profil aufweist, sodass es eine untere Wand (23) und eine Seitenwand (25) aufweist, wobei das vordere Teil (111)), die ferner eine obere Wand aufweist, die durch einen aufblasbaren Einsatz (27) gebildet ist.

2. Schienengehäuse (7) nach Anspruch 1, **dadurch gekennzeichnet, dass** der die obere Wand bildende Quelleinsatz (27) aus einem thermoplastischen oder duroplastischen Material besteht, das aus der Gruppe ausgewählt ist, die aus Polypropylenen, Polyamiden, Polyphthalamiden, Polyetheretherketonen, Polyphenylensulfiden, Polyamidimiden, Polyetherimiden, Polyarylamiden, Polyepoxiden, ungesättigten Polyestern, Vinylestern und Polyestervinylestern besteht.

3. Schienengehäuse (7) nach einem der Ansprüche 1 oder 2, **dadurch gekennzeichnet, dass** der Bläheinsatz (27) an der Seitenwand des Vorderteil-Ansatzes befestigt ist, vorzugsweise durch Klipsen.

4. Schienengehäuse (7) nach einem der Ansprüche 1 bis 3, **dadurch gekennzeichnet, dass** das Ansatzstück (21), das die untere (23) und die seitliche (25) Wand des vorderen Teils (11) umfasst, auch eine vordere Endwand (29) umfasst, die einen Rücksprung bildet und das vordere Ende des vorderen Teils (11) des Gehäuses (7) verschließt, wobei vorzugsweise die Endwand (29) sich in eine Zunge (35) zur Wiederaufnahme der Kraft fortsetzt.

5. Schienengehäuse (7) nach einem der Ansprüche 1 bis 4, **dadurch gekennzeichnet, dass** der Ansatz (21), der die untere (23) und seitliche (25) Wand des vorderen Teils (11) umfasst, auch eine vordere Endwand (29) umfasst, die einen Rücksprung bildet und das vordere Ende des vorderen Teils (11) des Gehäuses (7) verschließt, und dass der die obere Wand bildende aufblasbare Einsatz (27) einen mit expandierendem Material versehenen Finger aufweist, der sich in Richtung der unteren Wand (23) erstreckt, vorzugsweise der Finger entlang einer Verbindungslinie zwischen der Stirnwand (29) und einer sich in Verlängerung der Stirnwand erstreckenden Kraftaufnahmezunge (35).

6. Schienengehäuse (7) nach einem der Ansprüche 1 bis 5, **dadurch gekennzeichnet, dass** die untere Wand (23) des Ansatzes des Vorderteils (11) Stützlaschen (37) zur Abstützung einer Dichtungsschnur aufweist.

7. Schienengehäuse (7) nach einem der Ansprüche 1 bis 6, wobei der hintere Teil (9) des Gehäuses (7) eine Endwand (39) aufweist, wobei das Gehäuse (7) **dadurch gekennzeichnet ist, dass** an der Endwand (39) ein Bläheinsatz (41) befestigt ist, vorzugsweise durch Einrasten.

8. Schienengehäuse (7) nach einem der Ansprüche 1 bis 7, wobei der hintere Teil (9) des Gehäuses (7) eine Endwand (39) aufweist, **dadurch gekennzeichnet, dass** das Gehäuse (7) Positionierlaschen (45) aufweist, die im hinteren Teil (9) an der Endwand und/oder im vorderen Teil (11) an der unteren Wand (23) angeordnet sind, wobei vorzugsweise die untere Wand (23) des vorderen Teils (11) Stützlaschen (37) zur Halterung einer Dichtungsschnur aufweist, und die oder die Stützlaschen (37) zur Halterung einer Dichtungsschnur vorgesehen sind Die Positionierlappen (45) im vorderen Bereich sind in Verlängerung der Traglappen (37) angeordnet.

9. Fahrzeug (1) mit einer Schiebetür (3), **dadurch gekennzeichnet, dass** es ferner mindestens ein Schienengehäuse (7) nach einem der Ansprüche 1 bis 8 umfasst.

## Claims

1. Rail box (7) for a sliding door (3) of a motor vehicle (1), the housing (7) comprising a rear part (9) and a front part (11), the rear part (9) being connected by one end thereof to the front part (11), the front part (11) having a curvature, the housing (7) being **characterized in that** the front part (11) a metal plug (21) whose section has an "L" profile such as to have a lower wall (23) and a side wall (25), the front portion (11) further comprising an upper wall formed by an inflating insert (27).

2. Rail box (7) according to claim 1, **characterized in that** the inflating insert (27) forming the upper wall is made of a thermoplastic or thermosetting material, selected from the group consisting of polypropylenes, polyamides, polyphthalamides, polyetherketones, phenylene polysulfides, polyamides-imide, polyetherimides, polyarylamides, polyepoxides, unsaturated polyesters, vinylesters and polyesters-vinylester.

3. Rail box (7) according to one of Claims 1 or 2, **characterized in that** the inflating insert (27) is fixed to the side wall of the end-end of the front part, preferably by clipping.

4. Rail box (7) according to one of Claims 1 to 3, **characterized in that** the recess (21) comprising the lower and lateral walls (23) of the front part (11) also comprises a front end wall (29) forming a return and closing the front end of the front part (11) of the housing (7), preferably said front wall The end (29) is extended by a push-back tab (35).

5. Rail box (7) according to one of claims 1 to 4, **characterized in that** the press (21) comprising the lower (23) and side (25) walls of the front part (11) also comprises a front end wall (29) forming a return and closing the front end of the front part (11) of the box (7), and **in that** the inflating insert (27), forming the upper wall, has a finger carrying an expansive material and extending towards the lower wall (23), preferably said finger extends along one A junction line between said end wall (29) and a force-take tab (35) extending in extension of said end wall.

6. Rail box (7) according to one of claims 1 to 5, **characterized in that** the lower wall (23) of the press of the front part (11) comprises supporting tabs (37) for supporting a sealing bead.

7. Rail box (7) according to one of claims 1 to 6, wherein the rear part (9) of the box (7) has an end wall (39), the box (7) is **characterized in that** an inflating insert (41) is fixed to said end wall (39), preferably by clipping.

8. Rail box (7) according to one of claims 1 to 7, wherein the rear part (9) of the box (7) has an end wall (39), the box (7) is **characterized in that** it comprises positioning tabs (45) arranged at the rear part (9) at the end wall and/or at the front part (11) at the lower wall (23), preferably the lower wall (23) of the front part (11) comprises supporting tabs (37) for supporting a sealing bead, and the or the Positioning lugs (45) in the front part are arranged in extension of said support lugs (37).

9. Vehicle (1) comprising a sliding door (3) **characterized in that** it further comprises at least one rail box (7) according to one of claims 1 to 8.
